Europäisches Patentamt

European Patent Office

Office européen des brevets

(19)

(11) Veröffentlichungsnummer : **0 404 794 B1**

# (12) EUROPÄISCHE PATENTSCHRIFT

(45) Veröffentlichungstag der Patentschrift :
**07.10.92 Patentblatt 92/41**

(21) Anmeldenummer : **89903130.6**

(22) Anmeldetag : **13.03.89**

(86) Internationale Anmeldenummer :
**PCT/EP89/00260**

(87) Internationale Veröffentlichungsnummer :
**WO 89/08832 21.09.89 Gazette 89/23**

(51) Int. Cl.$^5$ : **G01N 21/31,** G01J 3/10,
G01N 21/71

(54) **ATOMABSORPTIONS-SPEKTROMETER.**

(30) Priorität : **18.03.88 DE 3809213**

(43) Veröffentlichungstag der Anmeldung :
**02.01.91 Patentblatt 91/01**

(45) Bekanntmachung des Hinweises auf die
Patenterteilung :
**07.10.92 Patentblatt 92/41**

(84) Benannte Vertragsstaaten :
**AT BE CH DE FR GB IT LI LU NL SE**

(56) Entgegenhaltungen :
GB-A- 2 096 315
Applied Spectroscopy, Band 27, Nr 6, November-Dezember 1973, D.L. Dick et al.:
"Modification of an atomic absorption unit fordual beam, background correction measurements", Seiten 467-470, siehe Seite 467, linke Spalte, Zeile 18-rechte Spalte, Zeile 35;Figur 1
Patent Abstracts of Japan, Band 4, Nr. 100 (P-19)(582), 18. Juli 1980 &JP, A, 5558419 1. Mai 1980, siehe Zusammenfassung;Figuren 3,4

(56) Entgegenhaltungen :
Trac.Trends in Analytical Chemistry, Band1, Nr. 9, Mai 1982, Elservier Scientific Publishing Company, (Cambridge, GB),L. deGalan:
"Zeeman atomic absorption spectrometry", Seiten 203-205, siehe Figur 2; Seite 204, linke Spalte, Zeilen 24-35
International Laboratory, Band 17, Nr. 3, April 1987 (Fairfield, Connecticut, US), R.P. Liddell et al.:"The effect ofbackground correction speed on the accuracy of AA measurements", Seiten 82-87, siehe Figur 1; Seite 82, mittlere Spalte, Zeile 10 -rechte Spalte, Zeile 13

(73) Patentinhaber : **BODENSEEWERK PERKIN-ELMER GMBH**
**Alte Nussdorfer Strasse 15**
**W-7770 Uberlingen/Bodensee (DE)**

(72) Erfinder : **DENCKS, Carl, Günther**
**Prielstrasse 3**
**W-7776 Owingen (DE)**
Erfinder : **ROEDEL, Günther**
**Hinter den Gärten 13**
**W-7776 Owingen (DE)**

(74) Vertreter : **Wolgast, Rudolf, Dr. et al**
**Bökenbusch 41 Postfach 11 03 86**
**W-5620 Velbert 11 Langenberg (DE)**

## Beschreibung

Die Erfindung betrifft ein Atomabsorptions-Spektrometer, enthaltend

(a) eine linienemittierende erste Lichtquelle,

(b) ein optisches System zur Erzeugung eines Strahlengangs mit einem Messlichtbündel, das durch einen Probenraum hindurchtritt und auf einen photoelektrischen Detektor fällt,

(c) eine in dem Probenraum angeordnete Atomisierungsvorrichtung zur Atomisierung einer Probe, derart, dass die Bestandteile der Probe in einem von dem Messlichtbündel durchsetzten Atomisierungsbereich in atomarer Form vorliegen,

(d) eine ein Kontinuum emittierende zweite Lichtquelle zur Untergrundkorrektur, von der ein Lichtbündel ausgeht, und

(e) einen Strahlenteiler, durch welchen das Lichtbündel von der zweiten Lichtquelle als Referenzlichtbündel in der Strahlengang des Meßlichtbündels einspiegelbar ist, und

(f) Einschaltmittel, durch welche die beiden Lichtquellen alternierend einschaltbar sind.

Atomabsorptions-Spektrometer dienen zur Bestimmung der Menge oder Konzentration eines gesuchten Elementes in einer Probe. Zu diesem Zweck wird von einer linienemittierenden Lichtquelle, beispielsweise einer Hohlkathodenlampe, ein Meßlichtbündel auf einen photoelektrischen Detektor geleitet. Im Strahlengang dieses Meßlichbündels ist eine Atomisierungsvorrichtung angeordnet. In dieser Atomisierungsvorrichtung wird die zu untersuchende Probe atomisiert, so daß ihre Bestandteile in atomarem Zustand vorliegen. Das Meßlichtbündel enthält die Resonanzlinien des gesuchten Elements. Diese Resonanzlinien des Meßlichtbündels werden von den Atomen des gesuchten Elements in der Atomwolke absorbiert, während im Idealfall die anderen in der Probe enthaltenen Elemente das Meßlichtbündel nicht beeinflußen. Das Meßlichtbündel erfährt daher eine Schwächung, die ein Maß für die Anzahl der im Weg des Meßlichtbündels befindlichen Atome des gesuchten Elements und damit je nach dem angewandten Atomisierungsverfahren ein Maß für die Konzentration oder die Menge des gesuchten Elementes in der Probe darstellt. Die Absorption, die das Meßlichtbündel erfährt, wird aber nicht nur durch die Atome des gesuchten Elements hervorgerufen. Es gibt eine "Untergrundabsorption", beispielsweise infolge der Absorption des Lichts durch Moleküle. Diese Untergrundabsorption muß insbesondere bei hochempfindlichen Messungen kompensiert werden.

Als Atomisierungsvorrichtung kann eine Flamme dienen, in welche eine Probe als Lösung eingesprüht wird. Für hochempfindliche Messungen verwendet man aber vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schließlich atomisiert. In dem Ofen bildet sich dann eine "Atomwolke" aus, in welcher das gesuchte Element in atomarer Form vorliegt. Das Meßlichtbündel wird durch diesen Ofen hindurchgeleitet. Diese Öfen können verschiedene Form haben. Sie werden üblicherweise aus Graphit hergestellt.

Die Erfindung betrifft die Untergrundkompensation bei einem solchen Atomabsorptions-Spektrometer.

## Zugrundeliegender Stand der Technik.

Zur Bestimmung und Kompensation der Untergrundabsorption werden im wesentlichen zwei Verfahren angewandt. Einmal wird abwechselnd mit dem Meßlichtbündel von der linienemittierenden Lichtquelle ein Referenzlichtbündel von einer ein Kontinuum emittierenden Lichtquelle mit einer relativ zu der Linienbreite großen Bandbreite durch die Flamme oder Atomwolke geleitet, wobei die Absorption des Meßlichtbündels durch Atomabsorption plus Untergrundabsorption hervorgerufen wird, während die Absorption des Referenzlichtbündels praktisch nur durch die Untergrundabsorption bestimmt ist (DE-A-1 911 048).

Es sind Atomabsorptions - Spektrometer bekannt, bei denen von einer linienemittierenden Lichtquelle ein Meßlichtbündel ausgeht und durch eine Flamme oder einen Ofen für die elektrothermische Atomisierung hindurch auf einen Detektor geleitet wird, und bei welchem alternierend mit diesem ein Linienspektrum eines gesuchten Elements enthaltenden Meßlichtbündel ein Referenzlichtbündel von einer ein Kontinuum emittierenden Lichtquelle wirksam wird. Dieses Referenzlichtbündel wird mittels eines Strahlenteilers in den Strahlengang des Meßlichtbündels eingespiegelt. Der Strahlenteiler ist dabei üblicherweise ein teildurchlässiger Spiegel. Dieser Spiegel weist gleichmäßig verteilt spiegelnde und durchlässige Flächenteile auf, so daß 50% des Meßlichtbündels durch die durchlässigen Flächenteile hindurchtreten und 50% des Referenzlichtbündels an den spiegelnden Flächenteilen in Richtung des Meßlichtbündels reflektiert werden. Der Wechsel zwischen Meßlichtbündel und Referenzlichtbündel wird dadurch bewirkt, daß die beiden Lichtquellen alternierend eingeschaltet werden ("Applied Spectroscopy" Bd 27, nr 6. (1973), 467-470) (Oberbegriff des Anspruchs 1).

Bei dieser bekannten Anordnung wird jedes Lichtbündel um 50% geschwächt. Das führt zu einer Verschlechterung des Signal - zu - Rausch - Verhältnisses, was bei sehr empfindlichen Messungen kritisch sein kann.

Es ist weiterhin bekannt, eine in der Winkelhalbierenden der Bündelachsen der von Holzkathodenlampe und Deuteriumlampe angeordnete Glasplatte auf einem Flächenteil durchlässig zu lassen und auf einem anderen Flächenteil mit einer Teilverspiegelung zu versehen. Die Glasplatte ist in ihrer Ebene verschiebbar, so daß die Lichtbündel wahlweise entweder beide auf die Teilverspiegelung fallen und ihre Strahlengänge sich überlagern, oder nur das Lichtbündel von der Hohlkathodenlampe durch den durchlässigen Teil der Glasplatte hindurch auf ein Photometer fällt. Das Gerät kann dann wahlweise als Einstrahlphotometer benutzt werden. (JP-A-55 58 419; "Patent Abstracts of Japan" Bd. 4, Nr. 100 (P-19),(582), 18.07.1980).

Ein anderes Verfahren zur Bestimmung der Untergrundabsorption beruht auf dem Zeeman-Effekt: Durch Anlegen eines Magnetfeldes an die Probe werden die Absorptionslinien des gesuchten Elementes in der Probe gegenüber den Spektrallinien des Meßlichtbündels verschoben, so daß in der Probe bei anliegendem Magnetfeld keine Atomabsorption stattfindet und nur die Untergrundabsorption gemessen wird. Durch Ein- und Ausschalten des Magnetfeldes kann dann die hinsichtlich Untergrundabsorption korrigierte Atomabsorption gemessen werden.

Durch die DE-AS 1 964 469 ist ein Atomabsorptions - Spektrometer bekannt, bei welchem die Strahlung von einer einzigen, als Linienstrahler ausgebildeten Strahlungsquelle ausgeht, deren durch die Probe tretende Strahlung unter Ausnutzung des longitudinalen Zeeman - Effektes frequenzmoduliert wird. Bei diesem bekannten Atomabsorptions - Spektrometer sitzt eine Hohlkathodenlampe zwischen den Polschuhen eines Elektromagneten. Einer der Polschuhe weist eine Bohrung auf, durch welche das Meßlichtbündel hindurchtritt. Das Meßlichtbündel tritt dann durch eine als Atomisierungsvorrichtung dienende Flamme und einen Monochromator und fällt auf einen photoelektrischen Detektor. Der Elektromagnet ist ein- und ausschaltbar, wobei aus der Differenz der Signale bei aus- und eingeschaltetem Elektromagneten die atomare, hinsichtlich der Untergrundabsorption kompensierte Absorption der Probenatome bestimmt werden kann. Die Wicklungen des Elektromagneten sitzen dort auf den Polschuhen.

Bei dem bekannten Atomabsorptions - Spektrometer werden die Emissionslinien der linienemittierenden Lichtquelle durch den Zeeman - Effekt periodisch verschoben und damit das emittierte Licht frequenzmoduliert und nicht die Absorptionslinien der Probe.

Durch die DE-PS 2 165 106 ist es bekannt, das Magnetfeld eines ein- und ausschaltbaren Elektromagneten statt an die Lichtquelle an die Atomisierungsvorrichtung anzulegen, also an die atomisierte Probe. Die Atomisierungs vorrichtung ist dabei eine Flamme. Das Magnetfeld wird senkrecht zur Laufrichtung des Meßlichtbündels angelegt. Es erfolgt hier eine Aufspaltung der Absorptionslinien infolge des "transversalen" Zeeman - Effektes, was wiederum eine Relativverschiebung der Emissionslinien des Meßlichtbündels und der Absorptionslinien der Probe bewirkt. Durch Ein- und Auschalten des Magnetfeldes kann wieder zwischen atomarer Absorption durch die Atome des gesuchten Elements und unspezifischer Untergrundabsorption unterschieden werden.

Bei der Anwendung des transversalen Zeeman - Effektes erfolgt die Aufspaltung einer Spektrallinie in eine zentrale Linie, deren Wellenlänge der unverschobenen Wellenlänge der betreffenden Linie bei abgeschaltetem Magnetfeld entspricht, und zwei demgegenüber zu höheren und zu niedrigeren Wellenlängen hin verschobenen Seitenlinien. Die zentrale Linie und die Seitenlinien sind unterschiedlich polarisiert. Man kann daher den Einfluß der zentralen Linie durch einen Polarisator eliminieren. Ein solcher Polarisator bringt jedoch einen Lichtverlust von 50%.

Die GB-A-2 096 315 beschreibt ein Atomabsorptions-Spektrometer, das mit einem Graphitrohr zur elektrothermischen Atomisierung der Probe arbeitet. Zur Untergrundkompensation ist ein wechselstromerregter Elektromagnet vorgesehen, der ein senkrecht zur Bündelachse des Meßlichtbündels verlaufendes Magnetfeld erzeugt. Durch den transversalen Zeeman-Effekt werden dabei die Absorptionslinien in eine zentrale $\Pi$ -Komponente, die bei der Wellenlänge der ungestörten Absorptionslinie liegt, und demgegenüber verschobene $\sigma$ -Komponenten aufgespalten. Die $\Pi$- und $\sigma$ -Komponenten sind unterschiedlich polarisiert. Ein Monochromator ist auf die Wellenlänge der ungestörten Absorptionsline eingestellt. Ein Polarisator zur Eliminierung der $\Pi$-Komponente ist dabei nicht vorgesehen.

Die Kompensation der Untergrundabsorption durch Anwendung des Zeeman-Effektes kann zu Schwierigkeiten führen, wenn sich die Untergrundabsorption schnell ändert, da der Frequenz des Ein- und Ausschaltens des Magnetfeldes infolge der Selbstinduktion des Elektromagneten Grenzen gesetzt sind ("International Laboratory" 17 (1987) No. 3).

Die verschiedenen Möglichkeiten der Zeeman-AAS sind in einem Aufsatz in TRAC Trends in Analytical Chemistry" Bd. 1, (1982), Mai, No. 9, 203-204 aufgezeigt.

**EP 0 404 794 B1**

## Offenbarung der Erfindung

Der Erfindung liegt die Aufgabe zugrunde, bei einem Gerät der eingangs genannten Art eine grössere Flexibilität hinsichtlich der Bestimmung der Untergrundabsorption zu ermöglichen und je nach den vorliegenden Verhältnissen ein Arbeiten mit optimalem Signalpegel zu gewährleisten.

Erfindungsgemäss wird diese Aufgabe dadurch gelöst, daß

(g) eine Zeemananordnung zur Untergrundkorrektur mit einem Elektromagneten, vorgesehen ist, durch den am Ort der atomisierten Probe ein Magnetfeld parallel zur Richtung des Messlichtbündels erzeugbar und durch den longitudinalen Zeeman-Effekt die Absorptionslinien der Atome der Probe relativ zu den emittierten Linien der ersten Lichtquelle verschiebbar sind, und

(h) der Strahlenteiler zur wahlweisen Untergrundkorrektur durch entweder die zweite Lichtquelle oder die Zeemananordnung in den Strahlengang hinein bzw. heraus bewegbar ist, wobei in dessen hineinbewegter Stellung bei abgeschaltetem Elektromagneten der Zeemananordnung das Lichtbündel der zweiten Lichtquelle in den Strahlengang des Messlichtbündels einspiegelbar ist und in dessen herausbewegter Stellung der Elektromagnet einschaltbar ist.

Es kann dann wahlweise mit Messung und Kompensation der Untergrundabsorption mittels der ein Kontinuum emittierenden Lichtquelle gearbeitet werden, wobei eine Schwächung des Messlichtbündels durch Strahlenteiler in Kauf genommen wird. Es ist aber auch möglich, wenn sich die Untergrundabsorption nicht besonders schnell ändert, die Messung der Untergrundabsorption unter Ausnutzung des Zeeman-Effektes vorzunehmen, ohne dass dabei das Messlichtbündel durch einen fest eingebauten Strahlenteiler zusätzlich geschwächt wird. Bei Anwendung des longitudinalen Zeeman-Effektes tritt am Ort der ursprünglichen Linie keine Absorptionslinie auf.

Dadurch wird die beim transversalen Zeeman-Effekt durch Verwendung des Polarisators hervorgerufene Lichtschwächung bzw. die ohne Polarisator erhaltene Verringerung der Empfindlichkeit vermieden.

Ein Ausführungsbeispiel der Erfindung ist nachstehend unter Bezugnahme auf die zugehörigen Zeichnungen näher erläutert.

## Kurze Beschreibung der Zeichnung

Die Figur zeigt schematisch den Aufbau eines Atomabsorptions-Spektrometers, bei welchem die Untergrundabsorption durch Ausnutzung des longitudinalen Zeeman-Effektes kompensiert wird.

## Bevorzugte Ausführung der Erfindung

Die Figur ist eine schematische Darstellung des Atomabsorptions - Spektrometers.

Das Atomabsorptions - Spektrometer weist ein Gehäuse 10 auf, in welchem die Lampen, das optische System und der photoempfindliche Detektor angeordnet sind. Das Gehäuse 10 bildet einen Probenraum 12. In dem Probenraum 12 ist eine Atomisierungsvorrichtung 14 angeordnet.

Das Atomabsorptions - Spektrometer weist als eine erste Lichtquelle 16 eine Hohlkathodenlampe 16 auf. Die Lichtquelle 16 emittiert ein Linienspektrum, das den Resonanzlinien eines bestimmten, gesuchten Elements entspricht. Von der Lichtquelle 16 geht ein Meßlichtbündel 18 aus. Das Meßlichtbündel 18 wird von einem Planspiegel 20 umgelenkt und von einem Hohlspiegel 22 durch eine Öffnung 24 des Gehäuses 10 hindurch in der Mitte des Probenraumes gesammelt. Das Meßlichtbündel tritt dann durch eine mit der Öffnung 24 fluchtenden Öffnung 26 des Gehäuses 10 und fällt auf einen zweiten Hohlspiegel 28. Von dem zweiten Hohlspiegel 28 wird das Meßlichtbündel 18 über einen Planspiegel 30 auf dem Eintrittsspalt 32 eines Monochromators 34 fokussiert. Hinter einem Austrittsspalt 36 des Monochromators 34 sitzt ein photoelektrischer Detektor 38. Das Signal des photoelektrischen Detektors 38 beaufschlagt eine Signalverarbeitungs - Schaltung 40.

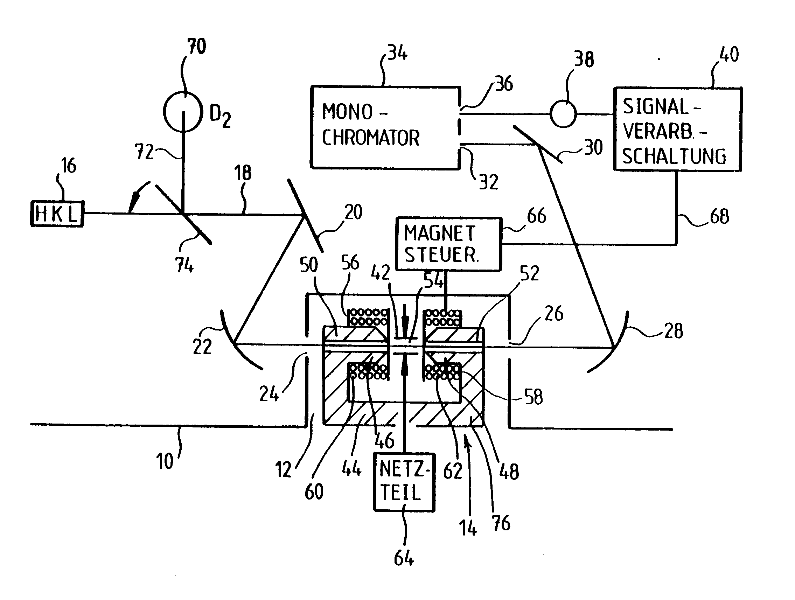

Die Atomisierungsvorrichtung 14 enthält einen Ofen zur elektrothermischen Atomisierung, von welchem in Fig.1 nur der eigentliche Ofenkörper 42 dargestellt ist, und einen ein- und ausschaltbaren Elektromagneten 44 zur Erzeugung eines Magnetfeldes am Ort der Probe. Der Elektromagnet 44 weist zwei fluchtende Polschuhe 44 und 46 auf, zwischen denen der Ofenkörper 42 sitzt. In den Polschuhen 46 und 48 sind fluchtende Bohrungen 50 und 52 angebracht. Die Bohrungen 50 und 52 fluchten mit einer Längsbohrung 54 des Ofenkörpers 42. Das Meßlichtbündel 18 verläuft durch die Bohrungen 50 und 52 und durch die Längsbohrung des Ofenkörpers. Auf den Polschuhen 50 und 52 sitzen Spulenhalterungen 56 bzw. 58. Auf diese Spulenhalterungen 56 und 58 sind Spulen 60 bzw. 62 des Elektromagneten 44 gewickelt. Mit 64 ist ein Netzteil bezeichnet, welches den Strom durch den Ofenkörper 42 steuert. Wie angedeutet, wird der Strom quer zur Laufrichtung des Meßlichtbündels 18 zugeführt und fließt in Umfangsrichtung durch den rohrförmigen Ofenkörper 42. Der Elektromagnet 44 ist von einer Magnetsteuerung 66 gesteuert, derart, daß das Magnetfeld abwechselnd ein- und

4

ausgeschaltet wird. Das Magnetfeld des Elektromagneten 44 verläuft am Ort der Probe innerhalb des Ofenkörpers in Laufrichtung des Meßlichtbündels 18. Bei eingeschaltetem Magnetfeld wird daher an den Probenatomen der longitudinale Zeeman - Effekt erzeugt. Das bedeutet, daß die Absorptionslinien der Probenatome in jeweils zwei Linien aufgespalten werden, die gegenüber der ungestörten ursprünglichen Absorptionslinie verschoben sind. Bei der Wellenlänge der ursprünglichen Absorptionslinie erfolgt keine atomare Absorption in der Probe mehr. Daher absorbieren auch die Atome des gesuchten Elements das Meßlichtbündel 18 nicht mehr, da dieses Meßlichtbündel nur die unverschobenen für das Element charakteristischen Resonanzlinien enthält. Bei eingeschaltetem Magnetfeld wird daher nur die Untergrundabsorption gemessen. Aus den Messungen bei ein- und ausgeschaltetem Magnetfeld kann der hinsichtlich der Untergrundabsorption korrigierte Anteil der echten Atomabsorption bestimmt werden. Der Takt der Ein- und Ausschaltung des Elektromagneten 44 wird zu diesem Zweck auf die Signalauswertungs - Schaltung 40 gegeben, wie durch eine Leitung 68 angedeutet ist. Durch die Anwendung des longitudinalen Zeeman - Effektes wird ein Polarisator im Strahlengang entbehrlich und das Nutzsignal verbessert.

In dem Gehäuse 10 sitzt eine zweite Lichtquelle 70, die ein Kontinuum emittiert. Diese zweite Lichtquelle ist eine Deuteriumlampe. Die zweite Lichtquelle 70 sendet ein Lichtbündel 72 aus. Dieses Lichtbündel 72 von der zweiten Lichtquelle 70 kann über einen in den Strahlengang wahlweise einschaltbaren Strahlenteiler 74 in den Strahlengang des Meßlichtbündels 18 eingeschwenkt werden. Die erste und die zweite Lichtquelle 16 bzw. 70 können in schneller Folge abwechselnd eingeschaltet werden, so daß abwechselnd ein Meßlichtbündel 18 mit einem Linienspektrum von der ersten Lichtquelle (Hohlkathodenlampe) 16 oder ein Meßlichtbündel mit einem Kontinuum von der zweiten Lichtquelle (Deuteriumlampe) durch die in dem Ofenkörper gebildete Atomwolke tritt. Bei dieser Betriebsweise mit eingeschaltetem Strahlenteiler 74 ist der Elektromagnet ausgeschaltet. Die Untergrundansorption kann dann dadurch bestimmt werden, daß abwechselnd die Absorption der sehr schmalen Spektrallinie der ersten Lichtquelle und die Absorption eines relativ zu der Spektrallinie breiten, durch den Monochromator 34 bestimmten Bandes von Kontinuumsstrahlung gemessen wird. Der Wechsel zwischen der ersten Lichtquelle 16 und der zweiten Lichtquelle 70 erfolgt mit einer Frequenz von mehr als 500 Hertz, nämlich 1000 Hertz. Die Arbeitsweise mit einer ein Kontinuum emittierenden zweiten Lichtquelle als Referenzlichtquelle gestattet es, relativ schnelle Änderungen der Untergrundabsorption zu erfassen, die bei der Ausnutzung des Zeeman-Effekts mittels des Elektromagneten 44 nicht erfaßt werden können. Der Elektromagnet 44 ist relativ träge, so daß der Frequenz des Wechsels zwischen Atomabsorptionsmessung und Untergrundmessung Grenzen gesetzt sind. Durch die Anwendung des longitudinalen Zeeman - Effektes ist kein Polarisator im Strahlengang erforderlich. Nach Abschaltung des Elektromagneten kann daher das Atomabsorptions - Spektrometer mit einer ein Kontinuum emittierenden zweiten Lichtquelle 70 arbeiten, ohne daß eine doppelte Lichtschwächung durch einen Polarisator und zusätzlich durch den Strahlenteiler 74 erfolgen würde.

Es ist aber auch möglich, den Elektromagneten 44 abzuschalten und gleichzeitig den Strahlenteiler 74 aus dem Strahlengang herauszubewegen. In diesem Fall wird ohne Untergrundkompensation aber mit voller Intensität des Meßlichtbündels gearbeitet.

**Patentansprüche**

1. Atomabsorptions-Spektrometer, enthaltend
   (a) eine linienemittierende erste Lichtquelle (16),
   (b) ein optisches System (20,22,28,30,34) zur Erzeugung eines Strahlengangs mit einem Messlichtbündel (18), das durch einen Probenraum (12) hindurchtritt und auf einen photoelektrischen Detektor (38) fällt,
   (c) eine in dem Probenraum (12) angeordnete Atomisierungsvorrichtung (14) zur Atomisierung einer Probe, derart, dass die Bestandteile der Probe in einem von dem Messlichtbündel (18) durchsetzten Atomisierungsbereich in atomarer Form vorliegen,
   (d) eine ein Kontinuum emittierende zweite Lichtquelle (70) zur Untergrundkorrektur, von der ein Lichtbündel (72) ausgeht,
   (e) einen Strahlenteiler (74), durch welchen das Lichtbündel von der zweiten Lichtquelle (70) als Referenzlichtbündel in der Strahlengang des Meßlichtbündels (18) einspiegelbar ist, und
   (f) Einschaltmittel, durch welche die beiden Lichtquellen (16,70) alternierend einschaltbar sind,
      **dadurch gekennzeichnet** daß
   (g) eine Zeemananordnung zur Untergrundkorrektur mit einem Elektromagneten (44) vorgesehen ist, durch den am Ort der atomisierten Probe ein Magnetfeld parallel zur Richtung des Messlichtbündels (18) erzeugbar und durch den longitudinalen Zeeman-Effekt die Absorptionslinien der Atome der Probe relativ zu den emittierten Linien der ersten Lichtquelle (16) verschiebbar sind, und

(h) der Strahlenteiler zur wahlweisen Untergrundkorrektur durch entweder die zweite Lichtquelle (70) oder die Zeemananordnung in den Strahlengang hinein bzw. heraus bewegbar ist, wobei in dessen hineinbewegter Stellung bei abgeschaltetem Elektromagneten (44) der Zeemananordnung das Lichtbündel (72) der zweiten Lichtquelle (70) in den Strahlengang des Messlichtbündels (18) einspiegelbar ist und in dessen herausbewegter Stellung der Elektromagnet (44) einschaltbar ist.

## Claims

1. Atomic absorption spectrometer, containing
   (a) a line emitting first light source (16),
   (b) an optical system (20,22,28,30,34) for generating a path of rays including a measuring light beam (18) which passes through a sample cavity (12) and impinges upon a photoelectric detector (38),
   (c) an atomizing device (14) arranged in the sample cavity (12) for atomizing the sample such that the sample constituents are present in the atomic state in an atomizing area which is passed through by the measuring light beam (18),
   (d) a continuum emitting second light source (70), from which a light beam originates, for background correction,
   (e) a beam splitter (74) by means of which the light beam originating from the second light source (70) can be reflected as a reference light beam into the path of rays of the measuring light beam (18),
   (f) switch-on means by means of which the two light sources (16,70) can be alternatingly switched on,
   **characterized in that**
   (g) a Zeeman arrangement including an electromagnet is provided for background correction, by means of which a magnetic field extending parallel to the direction of the measuring light beam (18) can produced at the location of the atomized sample and the absorption lines of the sample atoms can be shifted relative to the emitted lines of the first light source (16) due to the longitudinal Zeeman effect, and
   (h) the beam splitter can be moved into or out of the path of rays for selective background correction either by the second light source (70) or the Zeeman arrangement, whereby the light beam (72) of the second light source (70) can be reflected into the path of rays of the measuring light beam (18) in the moved-in position of the beam splitter and in a turned-off condition of the electromagnet of the Zeeman arrangement and the electromagnet can be turned on in the moved-out position of the beam splitter.

## Revendications

1. Spectromètre à absorption atomique, comprenant :
   (a) une première source lumineuse (16) à émission linéaire,
   (b) un système optique (20,22,28,30,34) destiné à produire un chemin de rayonnement avec un faisceau lumineux de mesure (18), qui traverse une enceinte à échantillon (12) et vient toucher un détecteur (38) photoélectrique,
   (c) un dispositif d'atomisation (14) disposé dans l'enceinte à échantillon (12), en vue d'assurer l'atomisation d'un échantillon, de telle façon que les composants de l'échantillon se présentent sous une forme atomique, dans dans une zone d'atomisation traversée par le faisceau de lumière de mesure (18),
   (d) une deuxième source lumineuse (70) émettant en continu, en vue d'opérer une correction de fond, d'où part un faisceau lumineux (72),
   (e) un diviseur de rayon (74), au moyen duquel le faisceau lumineux provenant de la deuxième source lumineuse (70) est susceptible d'être réfléchi, sous forme de faisceau lumineux de référence, dans le chemin de rayonnement du faisceau lumineux de mesure (18), et
   (f) des moyens de connexion, au moyen desquels les deux sources lumineuses (16,70) sont susceptibles d'être connectées alternativement,
   caractérisé en ce qu'
   (g) est prévu un dispositif de Zeeman destiné à la correction de fond, avec un électroaimant (44), au moyen duquel à l'emplacement de l'échantillon atomisé, un champ magnétique est susceptible d'être produit parallèlement à la direction du faisceau lumineux de mesure (18) et les lignes d'absorption des atomes de l'échantillon étant susceptibles d'être déplacées par rapport aux lignes d'émission de la première source lumineuse (16), au moyen de l'effet de Zeeman longitudinal, et
   (h) le diviseur de rayon est déplaçable, en vue d'opérer à volonté une correction de fond, soit par la deuxième source lumineuse (70) soit par le dispositif de Zeeman, afin d'entrer et/ou de sortir du chemin de rayonnement, où, dans sa position d'entrée, lorsque l'électroaimant (44) du dispositif de Zeeman, est mis hors service, le faisceau lumineux (72) de la deuxième source lumineuse (70) est susceptible d'être réfléchi dans le chemin de rayonnement du faisceau lumineux (18) et d'être connecté dans sa position sortie de l'électroaimant (44).

SIGNAL-VERARB.-SCHALTUNG

MONO-CHROMATOR

MAGNET STEUER.

NETZ-TEIL

HKL

$D_2$